# FASCICULE DE BREVET EUROPEEN

(11) **EP 0 718 257 B1**
(45) Date de publication et mention de la délivrance du brevet: **22.09.1999**
(21) Numéro de dépôt: 95402770.2
(22) Date de dépôt: 11.12.1995
(51) Int. Cl.: C06B 21/00, C06B 45/10, C06D 5/06, B01J 2/20

(54) **Procédé de fabrication en continu de chargements pyrotechniques à liant silicone et compositions susceptibles d'être mises en oeuvre par ce procédé**
Verfahren zur kontinuierlichen Herstellung von Siliconharz-gebundenen pyrotechnischen Ladungen und Zusammensetzung zur Verwendung in einem solchen Verfahren
Method of continuous fabrication of silicone-bonded pyrotechnic charges and composition for use in such a fabrication method

(30) Priorité: 22.12.1994 FR 9415459
(43) Date de publication de la demande: 26.06.1996
(73) Titulaire: SOCIETE NATIONALE DES POUDRES ET EXPLOSIFS, F-75181 Paris Cédex 04 (FR)
(72) Inventeur: Austruy, Hervé, F-33160 Saint Medard en Jalles (FR); Grignon, Jean, F-33600 Pessac (FR); Tauzia, Jean-Michel, F-33290 Caychac (FR)
(74) Mandataire: Pech, Bernard

(56) Documents cités:
- EP-A- 0 194 180
- DE-A- 1 963 104
- DE-C- 2 219 370
- FR-A- 2 109 102
- GB-A- 1 061 390
- US-A- 5 110 845
- US-A- 5 216 104

## Description

La présente invention se rapporte au domaine technique de la génération pyrotechnique de gaz utilisables notamment dans les systèmes de protection des occupants d'un véhicule automobile au moyen de coussins qui sont gonflés par les gaz de combustion d'un chargement pyrotechnique. Plus précisément l'invention concerne un procédé de fabrication en continu de chargements pyrotechniques composites extrudés à liant silicone pour générateurs pyrotechniques de gaz propres et non toxiques. L'invention concerne également des compositions pyrotechniques composites génératrices de gaz à liant silicone susceptibles d'être mises en oeuvre grâce au procédé selon l'invention.

Pour différents besoins pyrotechniques et notamment pour assurer un gonflement correct des coussins de protection, les générateurs pyrotechniques de gaz doivent fournir en des temps extrêmement courts, de l'ordre de trente millisecondes, des gaz propres c'est-à-dire exempts de particules solides susceptibles de constituer des points chauds pouvant endommager la paroi du coussin, et non toxiques c'est-à-dire à faibles teneurs en oxydes d'azote, en oxydes de carbone et en produits chlorés.

Diverses familles de compositions pyrotechniques ont été développées dans ce but.

Une première famille concerne les compositions à base d'azoture alcalin ou alcalino-terreux en présence d'un oxydant minéral comme le nitrate de potassium ou un oxyde métallique. Ces compositions qui peuvent le cas échéant comporter un liant présentent deux inconvénients majeurs. D'une part elles produisent lors de leur combustion beaucoup de poussières qui doivent être filtrées par des systèmes de filtration relativement importants, ce qui augmente à la fois le poids et le prix du générateur. D'autre part les azotures sont des produits très sensibles à l'humidité et ces compositions sont difficiles à conserver dans de bonnes conditions pendant plusieurs années dans un véhicule automobile.

Une seconde famille concerne les compositions à base de nitrocellulose et de nitroglycérine. Ces compositions, encore connue sous l'appellation de "poudres à double base", sont très intéressantes car elles brûlent très vite et sans produire de poussière. Mais elles présentent toutefois l'inconvénient de ne pas être totalement stables dans le temps en raison du phénomène de migration de la nitroglycérine, phénomène qui, au fil des ans, altère l'efficacité de ces compositions dans un véhicule automobile.

Une troisième famille concerne les compositions dites "composites" constituées fondamentalement par un liant organique et par une charge minérale oxydante comme notamment un perchlorate minéral. Ces compositions sont à priori très intéressantes car elles présentent une bonne vitesse de combustion et une excellente stabilité au vieillissement.

Il a ainsi été proposé par le brevet FR-A-2 137 619 ou par son correspondant US-A-3,723,205 des compositions dont le liant est un chlorure de polyvinyle et dont la charge oxydante est un perchlorate d'ammonium en présence de nitrate de sodium comme capteur interne de chlore. Néanmoins l'emploi d'un liant chloré en présence de charges énergétiques est d'une mise en oeuvre délicate, notamment au plan de la sécurité.

Il a alors été proposé des compositions composites constituées par un liant silicone réticulable à température ambiante, encore connu sous l'appellation de liant "RTV" (Room Temperature Vulcanizable), et de perchlorate de potassium, l'atome de potassium jouant le rôle de capteur interne de chlore. De telles compositions sont, par exemple, décrites dans les brevets FR-A-2 190 776 et FR-B-2 213 254 ou dans leurs correspondants américains US-A-3,986,908 et US-A-3,964,256.

Plus récemment il a également été proposé dans la demande de brevet WO94/06735 des compositions composites constituées par un liant silicone du type RTV et par des charges du type azotures métalliques ou composées nitrés comme le tétrazole.

L'emploi de compositions composites à liant silicone est en effet très intéressant dans le domaine de la sécurité automobile dans la mesure où la matrice silicone, lors de la combustion, produit un résidu vitreux qui assure une première filtration des gaz de combustion. Néanmoins ce type de compositions présente l'inconvénient d'être d'une mise en oeuvre délicate si l'on veut utiliser des procédés de fabrication continus faisant appel à une phase d'extrusion en raison de la mauvaise tenue mécanique des liants silicone non réticulés.

On sait par l'enseignement du brevet US-A-3,367,816 extruder en continu une pâte de résine silicone non réticulée pour assurer l'enduction interne de tubes fabriqués en continu. Mais l'on ne sait pas à l'heure actuelle, extruder en continu des objets à matrice silicone non réticulée ayant une forme et des dimensions parfaitement définies et stables de manière à pouvoir être ultérieurement réticulés sans variation des paramètres géométriques.

Les compositions pyrotechniques à liant silicone sont donc, à l'heure actuelle, utilisées sous forme de granulés et non sous forme d'un chargement monobloc possédant une forme et des cotes parfaitement définies car de tels chargements ne peuvent pas être obtenus par des procédés continus, mais seulement par des procédés discontinus de mise en forme et cuisson dans un moule qui sont d'un coût prohibitif pour l'industrie automobile.

Or pour assurer la fiabilité de fonctionnement du générateur pyrotechnique soumis à de nombreuses sollicitations mécaniques il est nettement préférable que ce dernier contienne un chargement de composition pyrotechnique sous forme d'un bloc dont la géométrie est peu sensible aux sollicitations mécaniques et notamment aux vibrations répétées, plutôt qu'un chargement en vrac de granulés.

L'homme de métier est donc à la recherche d'un procédé continu qui lui permette d'obtenir des chargements pyrotechniques composites à liant silicone présentant une géométrie définie et fiable, notamment dans le cas où le dit chargement doit présenter de faibles épaisseurs à brûler.

L'objet de la présente invention est précisément de proposer un tel procédé ainsi que des compositions pyrotechniques composites à liant silicone qui peuvent être mises en oeuvre par ce procédé.

L'invention concerne donc un procédé de fabrication en continu, par malaxage et extrusion, de chargements pyrotechniques constitués principalement par un liant silicone réticulable, par une charge oxydante comprenant essentiellement du perchlorate d'ammonium et du nitrate de sodium, et par des additifs, les dits constituants du chargement étant introduits en continu dans une boudineuse équipée en sortie d'une tête d'extrusion, le dit procédé étant caractérisé en ce que les constituants du dit liant sont introduits sous forme non réticulée et comprennent au moins :
**i)** une résine silicone de masse moléculaire inférieure à 20 000 et réticulable par des groupes hydrogéno-silanes,
**ii)** une gomme silicone de masse moléculaire supérieure à 100 000 et réticulable par des groupes hydrogéno-silanes,
**iii)** un réticulant qui est un hydrogéno-polysiloxane,
   de manière à permettre la formation d'une pâte homogène qui est profilée par extrusion à une température au plus égale à 30°C sous forme de joncs à géométrie stable, les dits joncs ainsi obtenus étant alors découpés à la longueur du chargement et réticulés à une température supérieure à 30°C.

En général la température de réticulation sera comprise entre 80°C et 120°C. Il est ainsi possible, grâce à l'emploi dans les constituants du liant d'une gomme et d'une résine de masses moléculaires très différentes, d'obtenir, en une seule extrusion, des joncs à côtes géométriques parfaitement stables avant et pendant la réticulation.

Toutefois, selon un mode préféré de réalisation de l'invention, les joncs profilés sont obtenus après une double extrusion. Selon ce mode préféré la pâte homogène est extrudée,en sortie de boudineuse, sous forme de cordeaux qui sont découpés en brins et repris dans un appareillage de mise en forme pour être profilés par extrusion sous forme de joncs à géométrie stable.

Selon une première variante préférée de l'invention, l'appareillage de mise en forme est une presse équipée d'une filière d'extrusion.

Selon une seconde variante préférée de l'invention, l'appareillage de mise en forme est une boudineuse équipée d'une tête d'extrusion.

Selon une troisième variante préférée de l'invention, les constituants du chargement sont introduits dans la boudineuse dans l'ordre suivant :
**a)** d'abord un mélange constitué par la gomme et la résine,
**b)** ensuite un mélange constitué par les charges oxydantes et les additifs,
**c)** enfin l'agent réticulant.

L'invention concerne également des compositions pour chargement pyrotechnique générateur de gaz, susceptibles d'être mises en oeuvre par le procédé continu selon l'invention et constituées par un liant silicone, par une charge oxydante comprenant essentiellement du perchlorate d'ammonium et du nitrate de sodium, et par des additifs, les dites compositions étant caractérisées par le fait que le dit liant est le produit de réaction :
**a)** d'au moins une résine silicone de masse moléculaire inférieure à 20 000 et réticuble par des groupes hydrogéno-silanes Si-H, en mélange avec au moins une gomme silicone de masse moléculaire supérieure à 100 000 et réticulable par des groupes hydrogéno-silanes,
**b)** avec au moins un réticulant qui est un hydrogéno-polysiloxane.

Selon une variante préférée de l'invention la composition ne contient qu'un seul agent réticulant qui est réactif, aussi bien vis-à-vis de la résine que vis-à-vis de la gomme.

Préférentiellement la résine est choisie dans le groupe constitué par les poly méthyl, vinyl siloxanes et notamment les poly diméthyl siloxane vinylique de masse moléculaire inférieure à 20 000.

Préférentiellement la gomme est choisie dans le groupe constitué par les poly méthyl, vinyl siloxanes et notamment les poly diméthyl siloxanes vinyliques de masse moléculaire supérieure à 100 000 et les poly méthyl-polyphényl siloxanes de masse moléculaire supérieure à 100 000.

Préférentiellement encore le réticulant est choisi dans le groupe constitué par les polyhydrogéno silanes de masse moléculaire comprise entre 250 et 700.

Selon une autre variante préférée de l'invention, le rapport molaire entre la dite résine et la dite gomme est compris entre 9 et 2.

Parmi les additifs pourra figurer un agent épaississant qui sera, par ailleurs, avantageusement choisi dans le groupe constitué par la silice, le polytétrafluoroéthylène et le noir de carbone.

Dans certains cas l'agent épaississant pourra être mélangé avec l'agent réticulant.

L'originalité fondamentale de l'invention réside dans le fait que le liant silicone comprend au départ, en plus de l'agent réticulant, d'une part une résine silicone réticulable et d'autre part une gomme silicone réticulable.

Il est ainsi possible d'ajuster la viscosité du liant non réticulé à une valeur telle que par incorporation de la charge oxydante et des additifs on obtienne une pâte qui puisse être extrudée et découpée avec des cotes géométriques stables à une température inférieure à 30°C.

Lorsque le chargement est placé en étuve, les réactions de réticulation de la résine et de la gomme sont conduites à leur terme, la réticulation de la résine étant plus rapide que celle de la gomme. En début de cuisson c'est donc la gomme lente à se ramollir, qui assure principalement la tenue mécanique du chargement et en cours de cuisson, lorsque la gomme non réticulée s'est ramollie et commence sa réticulation, c'est la résine et la gomme déjà réticulées qui assurent la tenue mécanique du chargement.

Les joncs profilés peuvent ainsi être découpés à la longueur voulue pour le chargement et la structure du liant est définitivement figée par réticulation en étuve à une température comprise entre 80°C et 120°C, sans altération géométrique.

Grâce aux compositions selon l'invention il est ainsi possible de fabriquer en continu des chargements pyrotechniques extrudés à liant silicone dont la forme et les dimensions sont parfaitement reproductibles sans aucun usinage après extrusion.

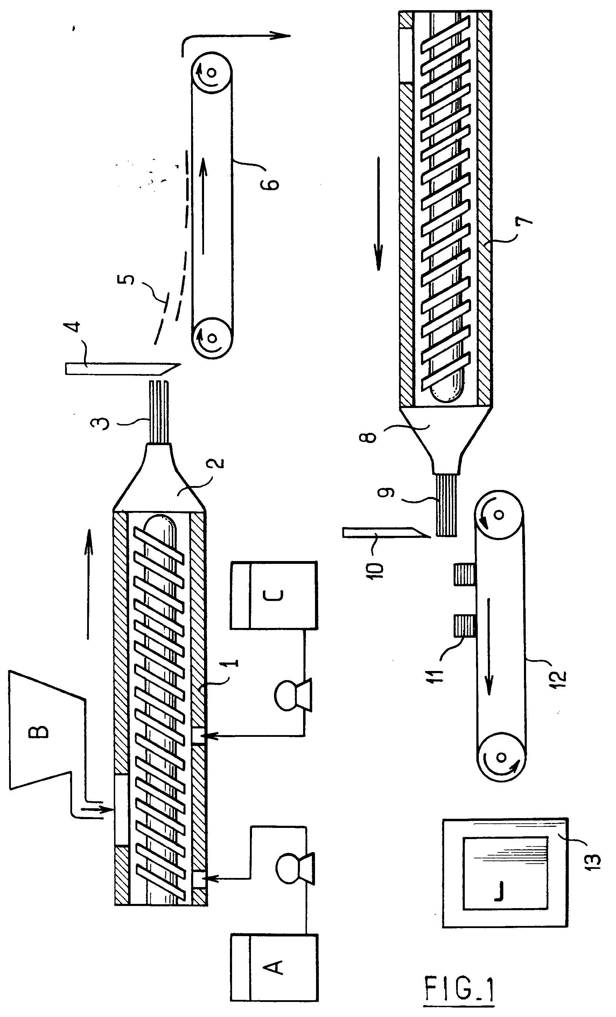

On donne maintenant une description détaillée du mode préféré de réalisation de l'invention en se référant à la figure 1 qui représente, sous forme de schéma, une installation permettant la mise en oeuvre du procédé selon l'invention, les flèches indiquant le sens d'avancement des produits en cours de procédé.

Dans une boudineuse bi-vis 1 équipée en sortie d'une tête d'extrusion 2 comportant plusieurs sorties de filage on introduit les constituants du chargement, les constituants du liant étant introduits sous forme non réticulée. Une telle boudineuse est encore appelée mélangeur extrudeur bi-vis.

Comme indiqué sur la figure 1, préférentiellement, les constituants sont introduits dans l'ordre suivant.

D'abord, en tête de boudineuse, on introduit un mélange **A** constitué par la gomme et la résine. Ensuite on introduit un mélange **B** constitué par les charges oxydantes et les additifs. Enfin on introduit l'agent réticulant **C**, éventuellement mélangé avec l'agent épaississant.

La dite résine silicone a une masse moléculaire inférieure à 20 000, préférentiellement comprise entre 1000 et 3000 et est réticulable par des groupes hydrogéno-silanes →Si-H. Préférentiellement la dite résine silicone sera porteuse de groupes vinyliques et sera choisie parmi les polydiméthylsiloxanes vinyliques. Sa fonctionnalité en groupes vinyliques sera préférentiellement comprise entre 0,5 et 15 équivalents/kg.

La dite gomme silicone a une masse moléculaire en poids supérieure à 100 000, pouvant aller jusqu'à quelques millions. Préférentiellement sa masse moléculaire est voisine de 500 000 et elle présente une viscosité très supérieure à celle de la résine, d'où son appelation de gomme.

Elle est réticulable par des groupes hydrogéno-silanes. Préférentiellement la dite gomme silicone sera porteuse de groupes vinyliques et sera choisie parmi les polydiméthyl siloxanes vinyliques, ou les polyméthyl-polyphényl siloxanes vinyliques . Sa fonctionnalité en groupes vinyliques sera préférentiellement comprise entre 10⁻⁴ et 5. 10⁻³ équivalents/kg.

Préférentiellement le rapport molaire entre la dite résine et la dite gomme sera compris entre 9 et 2.

Si la valeur de ce rapport est supérieure à 9, le mélange ne contient pas assez de gomme pour assurer une stabilité des cotes géométriques après extrusion ; si la valeur de ce rapport est inférieure à 2, le mélange contient trop de gomme pour pouvoir être injecté par pompage en continu dans la boudineuse.

Lorsque le mélange **A** constitué par la résine et la gomme est introduit au moyen d'une pompe doseuse dans la boudineuse, on introduit alors le mélange **B** constitué par les charges oxydantes et les additifs.

Comme charge oxydante on utilisera avantageusement un perchlorate minéral et notamment du perchlorate d'ammonium. Selon un mode de réalisation particulièrement avantageux de réalisation de l'invention on utilisera un mélange de deux types de perchlorate d'ammonium de granulométrie différentes, de manière à ce que la granulométrie moyenne du perchlorate d'ammonium soit comprise entre 250 µm et de 40 µm (micromètres ou microns).

Le perchlorate d'ammonium produisant par combustion des dérivés chlorés, il est nécessaire, aux fins des exigences en matière de sécurité automobile, de lui adjoindre un capteur de chlore. Le capteur de chlore préféré dans le cadre de la présente invention est le nitrate de sodium qui fixe le chlore sous forme de chlorure de sodium de taille submicronique, donc sans risque de détérioration des parois du coussin gonflable.

Le rapport pondéral perchlorate d'ammonium/nitrate de sodium sera avantageusement compris entre 0,95 et 1,30.

Le poids du mélange perchlorate d'ammonium + nitrate de sodium sera de son côté avantageusement compris entre 78% et 82% du poids total de la composition.

A côté du nitrate de sodium, la composition peut contenir d'autre additifs en fonction des besoins, par exemple des agents d'adhésion comme le vinyl tri (méthoxy-2 ethoxy) silane. Toutefois lorsque l'on utilise un agent épaississant, ce dernier sera avantageusement rajouté en mélange avec l'agent réticulant comme expliqué ci-après.

Enfin, après introduction du mélange **B** on introduit pour finir le mélange **C** constitué par l'agent réticulant avec, le cas échéant, l'agent épaissisant.

Le dit réticulant sera un hydrogéno-polysiloxane porteur de groupes hydrogéno-silanes →Si-H susceptibles de réagir par polyaddition avec les insaturations vinyliques de la résine et de la gomme. Sa masse moléculaire sera avantageusement comprise entre 250 et 700. Il sera préférentiellement choisi dans le groupe constitué par les polymères de type polydiméthyl siloxane comprenant des groupes fonctionnels hydrogéno-silanes →Si-H à raison de 10 à 15 équivalents/kg et éventuellement des groupes fonctionnels vinyliques à raison de 1 à 5 équivalents/kg.

Comme indiqué plus haut, selon un mode préféré de réalisation de l'invention, la composition ne contiendra qu'un seul agent réticulant, réactif aussi bien vis-à-vis de la résine que vis-à-vis de la gomme.

L'agent épaississant éventuel pourra être choisi parmi les divers agents épaississants utilisables dans les pâtes à liant silicone, et sera notamment choisi dans le groupe constitué par la silice, le polytétrafluoroéthylène et le noir de carbone. Le mélange **C** est introduit dans la boudineuse 1 au moyen d'une pompe doseuse.

La température des constituants à l'intérieur de la boudineuse 1 est maintenue en dessous de 30°C.

Les constituants de la composition sont ainsi travaillés en continu dans la boudineuse bi-vis 1 de manière à former une pâte homogène. Il faut souligner ici que cette pâte a une viscosité très élevée et que la boudineuse 1 doit être équipée d'outils adaptés à ce genre de travail.

La pâte ainsi obtenue est extrudée en continu en sortie de boudineuse sous forme de cordeaux 3 qui ont, grâce à la composition particulière du liant, suffisamment de tenue mécanique pour pouvoir être découpés en brins 5 dans une découpeuse 4. Les brins 5 sont récupérés par un tapis transporteur 6 et acheminés dans un appareillage de mise en forme 7.

Cet appareillage 7 est fondamentalement un appareillage d'extrusion. Il peut s'agir d'une presse équipée d'une filière d'extrusion, mais, préférentiellement et comme représenté sur la figure 1, il s'agira d'une seconde boudineuse 7 équipée d'une filière d'extrusion 8.

La composition pyrotechnique subit ainsi une deuxième extrusion au cours de laquelle elle est profilée sous forme de joncs 9 à la géométrie voulue pour le chargement pyrotechnique final.

Les joncs 9 ainsi obtenus sont alors découpés, par un outil de découpe 10, à la longueur voulue pour le chargement pyrotechnique. Les blocs 11 ainsi obtenus sont acheminés par un tapis transporteur 12 vers une étuve 13 chauffée à une température comprise entre 80°C et 120°C de manière à achever la réticulation des constituants du liant et à figer ainsi la structure des blocs 11.

Il est donc ainsi possible, grâce à l'invention, de fabriquer en continu par extrusion, et sans opérations d'usinage autres que de simples découpages, des blocs de chargements pyrotechniques à liant silicone qui soient parfaitement reproductibles.

Ces blocs trouvent leur application préférentielle comme chargement pyrotechnique dans les générateurs de gaz destinés à gonfler un coussin de protection pour occupants d'un véhicule automobile. Il a en effet été constaté par la demanderesse que la présence conjointe, dans le liant du chargement, d'une résine et d'une gomme telles que définies par la présente invention, conduisait à des vitesses de combustion convenant particulièrement bien aux exigences de la sécurité automobile.

Les exemples qui suivent illustrent, à titre non limitatif, certaines possibilités de mise en oeuvre de l'invention.

### Exemple 1

Selon le procédé représenté à la figure 1, on a fabriqué des blocs cylindriques creux de chargement pyrotechnique générateur de gaz à partir des mélanges suivants de constituants (l'abréviation éq/kg représentant des équivalents/kg) :

### mélange A :

- - résine :: polydiméthyl vinyl siloxane (fonctionnalité : 0,95 éq/kg)
de masse moléculaire : 1990
70 parties en poids,
- - gomme :: polydiméthyl vinyl siloxane (fonctionnalité : 4.10⁻³ éq/kg)
de masse moléculaire : 500 000
30 parties en poids.

### mélange B :

- - perchlorate d'ammonium granulométrie 40 µm :: 56,25 parties en poids
- - Nitrate de sodium :: 43,75 parties en poids.

### mélange C :

- - réticulant :: polyméthylhydrogénosiloxane : de masse moléculaire 400,
fonctionnalité SiH : 13 éq/kg,
fonctionnalité vinylique : 3 éq/kg.

On a ainsi utilisé :
- mélange **A** : 18,2 parties en poids soit 10,92 kg/h
- mélange **B** : 80,0 parties en poids soit 48,00 kg/h
- mélange **C** : 1,8 parties en poids soit 1,08 kg/h.

La composition a été extrudée et découpée en brins 5 qui ont été extrudés en joncs cylindriques creux 9 de diamètre extérieur 39,8 mm et de diamètre intérieur 14,6mm dans une boudineuse.

Les joncs ont été découpés en blocs cylindriques.

Les blocs ont été cuits en étuve à 120°C pendant 30 minutes.

Après cuisson on observe une variation dimensionnelle inférieure à 0,2%.

Les caractéristiques de gaz de combustion de ces blocs nécessaires pour gonfler un sac de volume de 60 litres sont les suivantes :
. teneur en CO : 4 500 ppm
. teneur en oxydes d'azote : 4 000 ppm
. teneur en dérivés chlorés : inférieure à 10 ppm.

La vitesse de combustion a été de 70mm/s sous 20 MPa.

### Exemple 2

On a procédé de manière analogue à celle de l'exemple 1.

### Mélange A

- - résine :: polydiméthyl vinyl siloxane (de masse moléculaire 3 000 et de fonctionnalité en groupes vinyliques : 0,66 éq/kg) :
80 parties en poids,
- - gomme :: polydiméthyl vinyl siloxane (de masse moléculaire 500 000 et de fonctionnalité en groupes vinyliques : 4.10⁻³ éq/kg) :
20 parties en poids.

### Mélange B

- analogue à l'exemple 1

### Mélange C

- Polydiméthyl siloxane-vinyl-hydrogéno silane de masse moléculaire 350 et de fonctionnalités :
   - en groupe Si-H : 12 éq/kg,
   - en groupe vinyliques : 2 éq/kg.

On a ainsi utilisé :
- mélange **A** : 18,2 parties en poids soit 9,1 kg/h
- mélange **B** : 80,0 parties en poids soit 40,0 kg/h
- mélange **C** : 1,8 parties en poids soit 0,9 kg/h

On a fabriqué des objets analogues à ceux de l'exemple 1 qui présentaient une vitesse de combustion de 55 mm/s sous 20 MPa et dont les gaz de combustion présentent les caractéristiques suivantes pour un volume de 60 litres :
- teneur en CO : 4 000 ppm
- teneur en oxydes d'azote : 4 000 ppm
- teneur en dérivés chlorés : inférieure à 10 ppm.

### Exemple 3

On a procédé de manière analogue à celle de l'exemple 1.

### Mélange A

- - résine :: polydiméthyl vinyl siloxane (de masse moléculaire 3 000 et de fonctionnalité en groupes vinyliques : 0,66 éq/kg) :
65 parties en poids,
- - gomme :: poly méthyl-vinyl poly phényl-vinyl siloxane (de masse moléculaire 2x10⁶ et de fonctionnalité en groupes vinyliques 10⁻⁴ éq/kg) :
35 parties en poids.

### Mélange B

- - perchlorate d'ammonium :: (80 µm/200 µm : 50/50) 43,64 parties en poids,
- - nitrate de sodium :: 36,36 parties en poids,

### Mélange C

Polydiméthyl siloxane vinyl hydrogéno silane de masse moléculaire 350 et de fonctionnalités :
- en groupes silanes Si-H : 12 éq/kg,
- en groupe vinyliques : 2 éq/kg.

On a ainsi utilisé :
- mélange **A** : 18,2 parties en poids soit 11,83 kg/h
- mélange **B** : 80,0 parties en poids soit 52,00 kg/h
- mélange **C** : 1,8 parties en poids soit 1,17 kg/h.
On a fabriqué des objets analogues à ceux de l'exemple 1 qui présentaient une vitesse de combustion de 65 mm/s sous 20 MPa et dont les gaz de combustion présentent les caractéristiques suivantes pour un volume de 60 litres :
- teneur en CO : 4 500 ppm
- teneur en oxydes d'azote : 3 000 ppm
- teneur en dérivés chlorés : inférieure à 10 ppm.

## Revendications

1. Procédé de fabrication en continu, par malaxage et extrusion, de chargements pyrotechniques constitués principalement par un liant silicone réticulable, par une charge oxydante comprenant essentiellement du perchlorate d'ammonium et du nitrate de sodium, et par des additifs, les dits constituants du chargement étant introduits en continu dans une boudineuse (1) équipée en sortie d'une tête d'extrusion (2), caractérisé en ce que les constituants du dit liant sont introduits sous forme non réticulée et comprennent au moins :
**i)** une résine silicone de masse moléculaire inférieure à 20 000 et réticulable par des groupes hydrogéno-silanes,
**ii)** une gomme silicone de masse moléculaire supérieure à 100 000 et réticulable par des groupes hydrogéno-silanes,
**iii)** un réticulant qui est un hydrogéno-poly siloxane,
de manière à permettre la formation d'une pâte homogène qui est profilée par extrusion à une température au plus égale à 30°C sous forme de joncs à géométrie stable, les dits joncs ainsi obtenus étant alors découpés à la longueur du chargement et réticulés à une température supérieure à 30°C.

2. Procédé de fabrication en continu de chargements pyrotechniques selon la revendication 1 caractérisé en ce que, en sortie de la boudineuse (1), la pâte homogène est extrudée sous forme de cordeaux (3) qui sont découpés en brins (5) et repris dans un appareillage de mise en forme (7) pour être profilés par extrusion sous forme de joncs (9) à géométrie stable.

3. Procédé selon la revendication 2 caractérisé en ce que l'appareillage de mise en forme est une presse équipée d'une filière d'extrusion.

4. Procédé selon la revendication 2 caractérisé en ce que l'appareillage de mise en forme est une boudineuse (7) équipée d'une tête d'extrusion (8).

5. Procédé selon la revendication 1 caractérisé en ce que les constituants du chargement sont introduits dans la boudineuse dans l'ordre suivant :
**a)** d'abord un mélange **(A)** constitué par la gomme et la résine,
**b)** ensuite un mélange **(B)** constitué par les charges oxydantes et les additifs,
**c)** enfin l'agent réticulant **(C)**.

6. Composition pour chargement pyrotechnique générateur de gaz, susceptible d'être mise en oeuvre par le procédé selon l'une quelconque des revendications 1 à 5 et constituée par un liant silicone, par une charge oxydante comprenant essentiellement du perchlorate d'ammonium et du nitrate de sodium, et par des additifs, caractérisée en ce que le dit liant est le produit de réaction :
**a)** d'au moins une résine silicone de masse moléculaire inférieure à 20 000 et réticulable par des groupes hydrogéno-silanes en mélange avec au moins une gomme silicone de masse moléculaire supérieure à 100 000 et réticulable par des groupes hydrogéno-silanes,
**b)** avec au moins un réticulant qui est un hydrogéno-polysiloxane.

7. Composition selon la revendication 6, caractérisée en ce que la dite résine est choisie dans le groupe constitué par les polydiméthylsiloxanes vinyliques.

8. Composition selon la revendication 6 caractérisée en ce que la dite gomme est choisie dans le groupe constitué par les polydiméthylsiloxanes vinyliques et les polyméthyl-polyphényl siloxanes vinyliques.

9. Composition selon la revendication 6 caractérisée en ce que le dit réticulant est choisi dans le groupe constitué par les polyhydrogéno silanes de masse moléculaire comprise entre 250 et 700.

10. Composition selon la revendication 6 caractérisée en ce que le rapport molaire entre la dite résine et la dite gomme est compris entre 9 et 2.

## Claims

1. Process for the continuous manufacture, by mixing and extrusion, of pyrotechnic charges consisting mainly of a crosslinkable silicon binder, an oxidizing filler essentially comprising ammonium perchlorate and sodium nitrate, and additives, the said constituents of the charge being introduced continuously into an extruder (1) fitted at the outlet with an extrusion head (2), characterized in that the constituents of the said binder are introduced in non-crosslinked form and comprise at least:
i) one silicon resin with a molecular mass of less than 20,000, which is crosslinkable with hydrogenosilane groups,
ii) a silicon gum with a molecular mass of greater than 100,000, which is crosslinkable with hydrogenosilane groups,
iii) a crosslinking agent which is a hydrogeno-polysiloxane,
so as to allow the formation of a homogeneous paste which is profiled by extrusion at a temperature of not more than 30°C, in the form of rods of stable geometry, the said rods thus obtained then being cut to the length of the charge and crosslinked at a temperature above 30°C.

2. Process for the continuous manufacture of pyrotechnic charges according to Claim 1, characterized in that, on leaving the extruder (1), the homogeneous paste is extruded in the form of fuses (3) which are cut into strips (5) and taken up in a shaping machine (7) in order to be profiled by extrusion in the form of rods (9) of stable geometry.

3. Process according to Claim 2, characterized in that the shaping machine is a press fitted with an extrusion die.

4. Process according to Claim 2, characterized in that the shaping machine is an extruder (7) fitted with an extrusion head (8).

5. Process according to Claim 1, characterized in that the constituents of the charge are introduced into the extruder in the following order:
a) first a mixture (A) consisting of the gum and the resin,
b) next, a mixture (B) consisting of the oxidizing fillers and the additives,
c) lastly, the crosslinking agent (C).

6. Composition for a gas-generating pyrotechnic charge, which can be used by the process according to any one of Claims 1 to 5 and which consists of a silicon binder, an oxidizing filler essentially comprising ammonium perchlorate and sodium nitrate, and additives, characterized in that the said binder is the product of reaction:
a) of at least one silicon resin with a molecular mass of less than 20,000, which can be crosslinked with hydrogenosilane groups, as a mixture with at least one silicon gum with a molecular mass of greater than 100,000, which can be crosslinked with hydrogenosilane groups,
b) with at least one crosslinking agent which is a hydrogeno-polysiloxane.

7. Composition according to Claim 6, characterized in that the said resin is chosen from the group consisting of polydimethylvinylsiloxanes.

8. Composition according to Claim 6, characterized in that the said gum is chosen from the group consisting of polydimethylvinylsiloxanes and polymethyl-polyphenylvinylsiloxanes.

9. Composition according to Claim 6, characterized in that the said crosslinking agent is chosen from the group consisting of polyhydrogenosilanes with a molecular mass of between 250 and 700.

10. Composition according to Claim 6, characterized in that the molar ratio between the said resin and the said gum is between 9 and 2.

## Patentansprüche

1. Verfahren zur kontinuierlichen Herstellung pyrotechnischer Ladungen durch Kneten und Extrudieren, die hautsächlich aus einem vernetzbaren Silicon-Bindemittel, einem oxidierenden Füllstoff, der im wesentlichen Ammoniumperchlorat und Natriumnitrat enthält, und Zusätzen bestehen, wobei die Bestandteile der Ladung kontinuierlich in einen Extruder (1) eingeführt werden, der an der Ausgangsöffnung mit einem Extruderwerkzeug (2) ausgerüstet ist, dadurch gekennzeichnet, daß die Bestandteile des Bindemittels in nicht vernetzter Form zugegeben werden und mindestens umfassen:
i) ein Siliconharz mit einer Molmasse unter 20 000, das durch Silanwasserstoffgruppen vernetzbar ist,
ii) einen Siliconkautschuk mit einer Molmasse über 100 000, das durch Silanwasserstoffgruppen vernetzbar ist,
iii) ein Vernetzungsmittel, bei dem es sich um ein Polysiloxan mit Silanwasserstoffgruppen handelt,
so daß ein homogenes pastöses Material erzeugt werden kann, das durch Extrusion bei einer Temperatur von höchstens 30 °C zu Strängen mit stabiler Geometrie geformt wird, wobei die so hergestellten Stränge anschließend auf die Länge der Ladung geschnitten und bei einer Temperatur oberhalb 30 °C vernetzt werden.

2. Verfahren zur kontinuierlichen Herstellung pyrotechnischer Ladungen nach Anspruch 1, dadurch gekennzeichnet, daß an der Ausgangsöffnung des Extruders (1) das homogene pastöse Material in Form von Schnüren (3) extrudiert wird, die in Stücke (5) zerschnitten werden, die von einer Formgebungsvorrichtung (7) aufgenommen werden, wobei durch Extrusion Stränge (9) mit stabiler Geometrie geformt werden.

3. Verfahren nach Anspruch 2, dadurch gekennzeichnet, daß die Formgebungsvorrichtung eine Presse ist, die mit einer Extruderdüse ausgerüstet ist.

4. Verfahren nach Anspruch 2, dadurch gekennzeichnet, daß die Formgebungsvorrichtung ein Extruder (7) ist, der mit einem Extruderwerkzeug (8) ausgerüstet ist.

5. Verfahren nach Anspruch 1, dadurch gekennzeichnet, daß die Bestandteile der Ladung in folgender Reihenfolge in den Extruder eingeführt werden:
a) zunächst ein Gemisch (A), das aus dem Siliconkautschuk und dem Siliconharz besteht,
b) anschließend ein Gemisch (B), das aus den oxidierenden Füllstoffen und den Zusätzen besteht,
c) schließlich das Vernetzungsmittel (C).

6. Zusammensetzung für Ladungen für pyrotechnische Gasgeneratoren, die nach dem Verfahren nach einem der Ansprüche 1 bis 5 hergestellt werden kann und die aus einem Silicon-Bindemittel, einem oxidierenden Füllstoff, der im wesentlichen Ammoniumperchlorat und Natriumnitrat enthält, und Zusätzen besteht, dadurch gekennzeichnet, daß das Bindemittel das Produkt der Umsetzung
a) mindestens eines Siliconharzes mit einer Molmasse unter 20 000, das durch Silanwasserstoffgruppen vernetzbar ist, im Gemisch mit mindestens einem Siliconkautschuk mit einer Molmasse über 100 000, der durch Silanwasserstoffgruppen vernetzbar ist,
b) mit mindestens einem Vernetzungsmittel ist, bei dem es sich um ein Polysiloxan mit Silanwasserstoffgruppen handelt.

7. Zusammensetzung nach Anspruch 6, dadurch gekennzeichnet, daß das Siliconharz unter vinylgruppenhaltigen Polydimethylsiloxanen ausgewählt ist.

8. Zusammensetzung nach Anspruch 6, dadurch gekennzeichnet, daß der Siliconkautschuk unter vinylgruppenhaltigen Polydimethylsiloxanen und vinylgruppenhaltigen Polymethylpolyphenylsiloxanen ausgewählt ist.

9. Zusammensetzung nach Anspruch 6, dadurch gekennzeichnet, daß das Vernetzungsmittel unter Polysiloxanen, die Silanwasserstoffgruppen aufweisen, mit einer Molmasse von 250 bis 700 ausgewählt ist.

10. Zusammensetzung nach Anspruch 6, dadurch gekennzeichnet, daß das Molverhältnis von Siliconharz zu Siliconkautschuk im Bereich von 9 bis 2 liegt.
